(19) Europäisches Patentamt
European Patent Office
Office européen des brevets

(11) **EP 2 991 055 A1**

(12) **EUROPEAN PATENT APPLICATION**
published in accordance with Art. 153(4) EPC

(43) Date of publication:
**02.03.2016 Bulletin 2016/09**

(51) Int Cl.:
***G08G 1/00*** *(2006.01)*

(21) Application number: **14803668.4**

(22) Date of filing: **21.05.2014**

(86) International application number:
**PCT/JP2014/063465**

(87) International publication number:
**WO 2014/192615 (04.12.2014 Gazette 2014/49)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **30.05.2013 JP 2013114109**

(71) Applicant: **Mitsubishi Heavy Industries, Ltd.
Tokyo 108-8215 (JP)**

(72) Inventors:
• **KOYANAGI Yoko
Tokyo 108-8215 (JP)**
• **ONO Hidekazu
Tokyo 108-8215 (JP)**

(74) Representative: **Henkel, Breuer & Partner
Patentanwälte
Maximiliansplatz 21
80333 München (DE)**

(54) **SIMULATION DEVICE, SIMULATION METHOD, AND PROGRAM**

(57)    A simulation device (200), provided with: an acceleration computation unit (211) for calculating acceleration information indicating the acceleration of a measurement vehicle at each point in time during travel, on the basis of travel history information, which is acquired on the basis of actual travel by the measurement vehicle along a predetermined travel route; and a vehicle state computation unit (212) for calculating, on the basis of the acceleration information, a predetermined state quantity of a predetermined imaginary vehicle expected when the imaginary vehicle travels in an equivalent manner relative to that of the measurement vehicle.

*FIG. 5*

**Description**

[Technical Field]

The present invention relates to a simulation device, a simulation method, and a program that calculate a state quantity which is assumed when a vehicle travels.
Priority is claimed on Japanese Patent Application No. 2013-114109, filed May 30, 2013, the content of which is incorporated herein by reference.

[Background Art]

A method of using a traffic flow simulator to simulate and estimate power consumption of a vehicle equipped with a storage battery such as an electric vehicle (EV) or a plug-in hybrid electric vehicle (PHEV) is known. In general, when a traffic flow simulator is used, traffic conditions need to be reproduced in a virtual world on a computer. This is referred to as situation reproduction. In order to realize the situation reproduction, first, spot traffic volumes on a road and signal timings at principal intersections are acquired, trip times on principal roads are measured, and the like. Subsequently, origin-destination data is generated from person trip data in zones. Then, a simulation is performed and a tuning operation needs to be performed on a simulator such that the spot traffic volumes and the trip times match the simulation results.
Techniques for simulating a traffic flow based on various models in such a traffic flow simulator have been proposed. For example, a "macro model" in which an actual road network is divided into predetermined intersections (nodes), the entire flow of vehicles between the nodes is defined, and a macro traffic flow is simulated and a "following model" in which a traffic flow is simulated based on behaviors of individual vehicles and inter-vehicle distances are established. A technique of inputting vehicle information of vehicles, which have passed through detection ranges of several sensors installed on actual roads, in real time and adjusting parameters of the following model based on the measured vehicle information is disclosed as a technique associated with a traffic flow simulator based on the following model (Patent Literature 1).

[Citation List]

[Patent Literature]

[Patent Literature 1] Japanese Unexamined Patent Application, First Publication No. Hei 11-232583

[Summary of Invention]

[Technical Problem]

However, in a situation reproduced by the situation reproduction on the traffic flow simulator, in order to simulate travel of an EV or a PHEV and to simulate power consumption thereof, it is necessary to acquire necessary data and to spend both time and money on the situation reproducing operation.
An object of the present invention is to provide a simulation device, a simulation method, and a program that can reduce time and cost required for situation reproduction in a traffic flow simulator and that can provide more accurate simulation results.

[Solution to Problem]

According to a first aspect of the present invention, there is provided a simulation device including an acceleration calculating unit configured to calculate acceleration information which indicates acceleration at each point in time while a measuring vehicle travels based on travel history information, which is information acquired based on actual travel of the measuring vehicle on a predetermined travel route, and a vehicle state calculating unit configured to calculate a state quantity of a predetermined state of a predetermined virtual vehicle, which is assumed to travel in a travel manner equivalent to travel of the measuring vehicle, based on the acceleration information.
According to a second aspect of the present invention, in the simulation device, the vehicle state calculating unit may calculate the state quantity of the virtual vehicle with one vehicle type specific information selected from one or more vehicle type specific information including a group of specific values which are uniquely determined in advance for vehicle types based on the acceleration information and the selected one vehicle type specific information.
According to a third aspect of the present invention, the simulation device may further include a following model calculating unit configured to simulate travel of a virtual following vehicle which travels behind the measuring vehicle based on the travel history information, and the vehicle state calculating unit may calculate the state quantity of the virtual following vehicle, which is assumed to travel behind the measuring vehicle, based on the acceleration information of the virtual following vehicle, which is acquired from simulated travel of the virtual following vehicle.

According to a fourth aspect of the present invention, in simulation device, the vehicle state calculating unit may calculate power consumption as the state quantity.

According to a fifth aspect of the present invention, in the simulation device, the acceleration calculating unit may input position information and speed information of the measuring vehicle which are acquired as the travel history information by a GPS.

According to a sixth aspect of the present invention, there is provided a simulation method including: calculating acceleration information which indicates acceleration at each point in time while a measuring vehicle travels based on travel history information, which is information acquired based on actual travel of the measuring vehicle on a predetermined travel route; and calculating a state quantity of a predetermined state of a predetermined virtual vehicle, which is assumed to travel in a travel manner equivalent to travel of the measuring vehicle, based on the acceleration information.

According to a seventh aspect of the present invention, there is provided a program causing a computer of a simulation device to function as acceleration calculating means configured to calculate acceleration information which indicates acceleration at each point in time while a measuring vehicle travels based on travel history information, which is information acquired based on actual travel of the measuring vehicle on a predetermined travel route, and vehicle state calculating means configured to calculate a predetermined state quantity of a predetermined state of a predetermined virtual vehicle, which is assumed to travel in a travel manner equivalent to travel of the measuring vehicle, based on the acceleration information.

[Advantageous Effects of Invention]

It is possible to provide a simulation device that can reduce time and cost required for situation reproduction in a traffic flow simulator and that can provide more accurate simulation results.

[Brief Description of Drawings]

Fig. 1 is a diagram schematically illustrating a simulation system according to a first embodiment of the present invention.
Fig. 2 is a conceptual diagram illustrating a system including a travel history information collecting device according to the first embodiment of the present invention.
Fig. 3 is a block diagram illustrating an internal configuration of the travel history information collecting device according to the first embodiment of the present invention.
Fig. 4 is a diagram illustrating a travel history information table according to the first embodiment of the present invention.
Fig. 5 is a block diagram illustrating a functional configuration of a simulation device according to the first embodiment of the present invention.
Fig. 6 is a diagram illustrating a power consumption calculation model according to the first embodiment of the present invention.
Fig. 7 is a flowchart illustrating a process flow in the simulation device according to the first embodiment of the present invention.
Fig. 8 is a block diagram illustrating a functional configuration of a simulation device according to a second embodiment of the present invention.
Fig. 9 is a conceptual diagram illustrating a following model which is used for a following model calculating unit according to the second embodiment of the present invention.

[Description of Embodiments]

<First Embodiment>

Hereinafter, a simulation system according to a first embodiment of the present invention will be described with reference to the accompanying drawings.

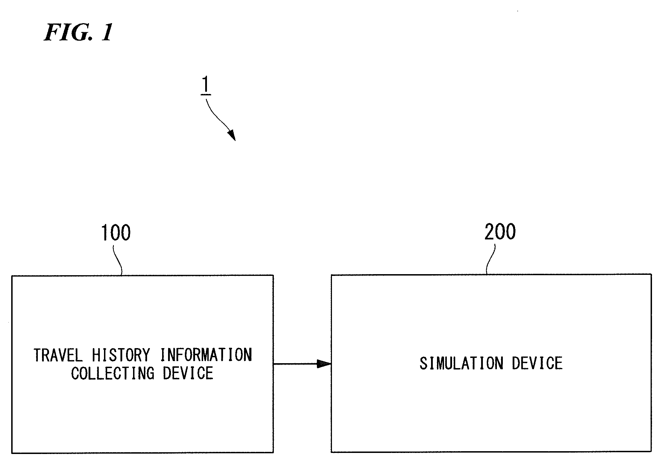

Fig. 1 is a diagram illustrating a simulation system 1 according to the first embodiment.
As illustrated in Fig. 1, the simulation system 1 according to this embodiment includes a travel history information collecting device 100 and a simulation device 200. The travel history information collecting device 100 is, for example, an on-board unit or a data logger which is mounted on a vehicle and collects information (hereinafter, referred to as "travel history information") indicating an actual travel history of a predetermined vehicle based on the actual travel of the vehicle. Details of the travel history information will be described later.

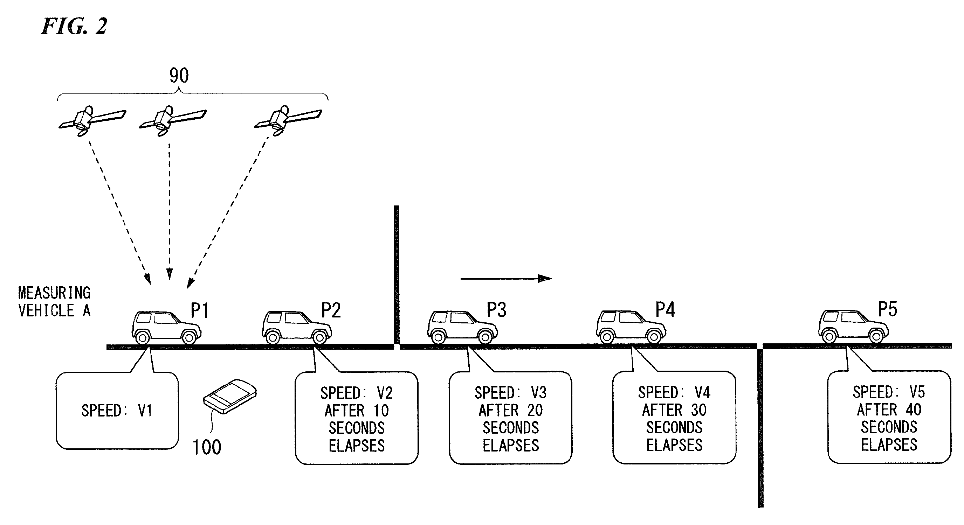

Fig. 2 is a conceptual diagram illustrating a system including the travel history information collecting device according to the first embodiment of the present invention.

An example of the travel history information in the travel history information collecting device 100 will be described below with reference to Fig. 2. This system includes the travel history information collecting device 100 mounted on a vehicle which travels beforehand on a road and global positioning system (GPS) satellites 90. In the following description, a target vehicle of which travel history information is collected by the travel history information collecting device 100 is referred to as a "measuring vehicle A." The measuring vehicle A may be any one of various types of vehicles and may be a gasoline automobile, an electric automobile, or the like. The measuring vehicle A may be a large-size vehicle such as a truck or a bus. In this case, the travel history information collecting device 100 may collect travel history information in addition to information such as a vehicle type of the measuring vehicle A. That is, the travel history information input to the simulation device 200 may include vehicle type specific information (which will be described later) of the measuring vehicle A which is correlated with the travel history information collected by the travel history information collecting device 100.

A target of which the travel history information is collected is not limited to a vehicle, but may be, for example, a bicycle or a motorcycle as long as it can travel on a road. The travel history information may be information which is acquired by a person getting on a bus or in an automobile in a state in which the person carries the travel history information collecting device 100.

As illustrated in Fig. 2, in a state in which the measuring vehicle A is traveling on a road, the travel history information collecting device 100 detects a current position every time unit (for example, every 10 seconds) and position information P1, P2, P3, P4, P5, ... is acquired. At the positions indicated by the position information P1, P2, P3, P4, and P5, speeds of the measuring vehicle are V1, V2, V3, V4, and V5, respectively. The travel history information collecting device 100 stores the speeds (speed information) V1, V2, V3, V4, and V5 of the measuring vehicle A in a storage unit (a storage unit 106 to be described later) included therein in correlation with the position information P1, P2, P3, P4, and P5 using a speed acquiring unit 104 (which will be described later).

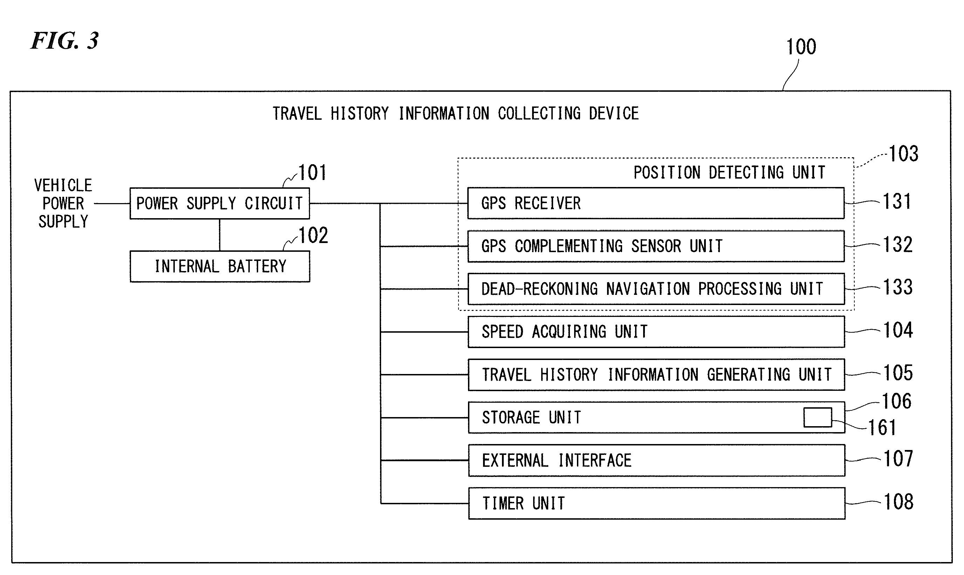

Fig. 3 is a block diagram illustrating a functional configuration of the travel history information collecting device according to the first embodiment of the present invention.

A configuration example in which the travel history information collecting device 100 is an on-board unit will be described below. The travel history information collecting device 100 includes a power supply circuit 101, an internal battery 102, a position detecting unit 103, the speed acquiring unit 104, a travel history information generating unit 105, the storage unit 106, an external interface 107, and a timer unit 108. The position detecting unit 103 includes a GPS receiver 131, a GPS complementing sensor unit 132, and a dead-reckoning navigation processing unit 133. The storage unit 106 includes a travel history information table 161 storing the position information detected by the position detecting unit 103 and the speed information acquired by the speed acquiring unit 104 in correlation with each other.

The power supply circuit 101 includes a regulator stabilizing a power supply and a noise protector, and supplies a source voltage of 12 V or 24V, which is received from the vehicle A, to the units of the travel history information collecting device 100.

The internal battery 102 is a backup battery and supplies power to the units to protect data stored in the travel history information collecting device 100 when the power supply of the measuring vehicle A is extinguished or temporarily blacks out.

The position detecting unit 103 is a functional unit that detects the position of the travel history information collecting device 100, for example, at predetermined timings or intervals, using the GPS receiver 131, the GPS complementing sensor unit 132, and the dead-reckoning navigation processing unit 133 and outputs position information indicating the detected position. In this embodiment, the position detecting unit 103 detects the position of the travel history information collecting device 100, for example, every 10 seconds.

The GPS receiver 131 receives radio waves from the GPS satellites 90, reads time information, and measures the latitude and the longitude based on the received radio waves.

The GPS complementing sensor unit 132 includes a gyro sensor and an acceleration sensor and performs an operation of estimating the position of the travel history information collecting device 100 from information of the gyro sensor and the acceleration sensor. The GPS complementing sensor unit 132 may be, for example, a constituent unit which is used when the reception sensitivity of radio waves from the GPS satellites 90 is not satisfactory.

The dead-reckoning navigation processing unit 133 performs an operation of complementing the position of the travel history information collecting device 100 based on the latitude and longitude measured by the GPS receiver 131 and the information of the position of the travel history information collecting device 100 estimated by the GPS complementing sensor unit 132 depending on the accuracy of information included in the radio waves received by the GPS receiver 131.

The speed acquiring unit 104 acquires the speed of the measuring vehicle A at the position detected by the position detecting unit 103. The speed acquiring unit 104 acquires the speed information of the measuring vehicle A output from an engine control unit (ECU) of the measuring vehicle A, for example, at the same time as detection of the position by the position detecting unit 103. In this embodiment, the speed acquiring unit 104 acquires the speed of the measuring vehicle A at the same time as detection of the position by the position detecting unit 103, for example, every 10 seconds from the same start time.

The speed acquiring unit 104 may calculate the speed of the measuring vehicle A based on the position information detected by the position detecting unit 103. In this case, the speed acquiring unit 104 may calculate the speed (average speed) of the measuring vehicle A between detection points, for example, based on information indicating distances between the detection points calculated based on the position information and the times at which the position information is detected.

The travel history information generating unit 105 writes the time information included in the radio waves from the GPS satellites 90 and the position information detected by the position detecting unit 103 to the travel history information table 161 of the storage unit 106 in correlation with each other. The travel history information generating unit 105 writes the speed information acquired by the speed acquiring unit 104 and the time information indicating the time at which the measuring vehicle A travels at the speed indicated by the speed information to the travel history information table 161 in correlation with each other. The travel history information generating unit 105 is not limited to the time information included in the radio waves from the GPS satellites 90, but may correlate the position information and the speed information with output information from the timer unit 108 counting the time at which the position information and the speed information are acquired.

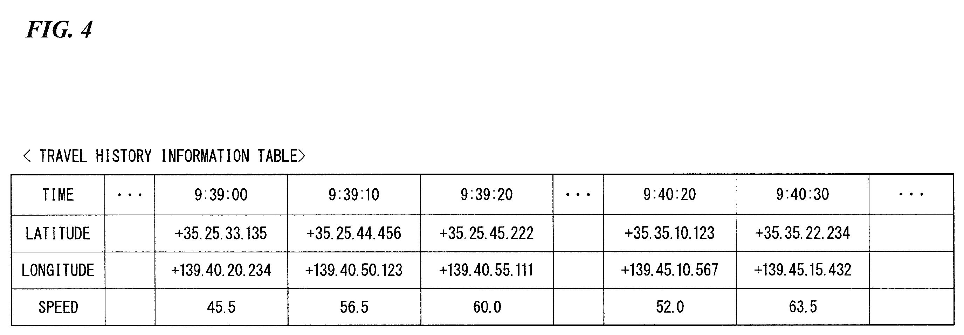

The storage unit 106 stores a program or data used in the travel history information collecting device 100. The storage unit 106 includes the travel history information table 161 storing the information of the latitude and the longitude detected by the position detecting unit 103 and the speed information acquired by the speed acquiring unit 104 in correlation with the time information included in the radio waves from the GPS satellites 90, for example, as will be described later (Fig. 4).

The external interface 107 is connected to an external device, for example, the simulation device 200 and outputs information stored in the storage unit 106 to the simulation device 200.

Fig. 4 is a diagram illustrating the travel history information table according to the first embodiment of the present invention.

An example of the travel history information table 161 will be described below with reference to Fig. 4. As illustrated in Fig. 4, the travel history information table 161 is a table in which the time information, the position information (latitude and longitude), and the speed information (unit: km) are stored in correlation with each other. The travel history information in this embodiment is an information group in which the position information, the speed information, and the time information are correlated with each other, and the position information and the speed information indicate the position and the speed of the measuring vehicle A at the time indicated by the time information. Accordingly, the travel history information is an information group indicating a travel track of the moving measuring vehicle A and behavior thereof every unit time (for example, every 10 seconds) from the same start time.

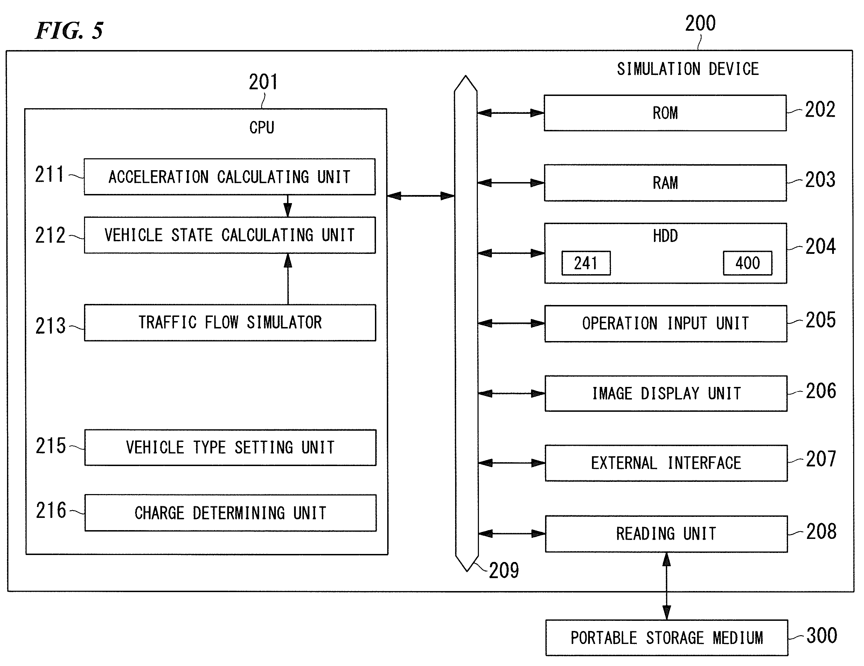

Fig. 5 is a block diagram illustrating a functional configuration of the simulation device according to the first embodiment of the present invention.

The functional configuration of the simulation device 200 will be described below with reference to Fig. 5. The simulation device 200 according to this embodiment is a device that simulates a predetermined automobile model traveling. In the following description, a vehicle simulating travel equivalent to the actual travel of the measuring vehicle A in the simulation device 200 is referred to as a virtual vehicle B. The simulation device 200 according to this embodiment has a particular function of applying an electric automobile as the automobile model of the virtual vehicle B and calculating power consumption which is assumed in the simulated travel of the virtual vehicle B.

Here, examples of the electric automobile include a motorcycle, an ordinary automobile (including a taxi), a bus, and a truck which are driven with electric power as well as a hybrid vehicle (hybrid vehicle of the above-mentioned various automobiles) of gasoline and electricity, in which a storage battery is chargeable. On the other hand, examples of a gasoline automobile include a motorcycle, an ordinary automobile (including a taxi), a bus, and a truck which are driven with gasoline alone. In the following description, an automobile refers to both the gasoline automobile and the electric automobile.

The simulation device 200 includes a central processing unit (CPU) 201 that takes charge of operations of the entire system of the simulation device 200, a read only memory (ROM) 202 in which various programs or various parameters are stored in advance, a random access memory (RAM) 203 that is used as a work area when the CPU 201 executes various programs, and a hard disk drive (HDD) 204 as storage means storing various programs such as a traffic simulation program, of which details will be described later, and a variety of information. As illustrated in Fig. 5, the CPU 201 includes an acceleration calculating unit 211, a vehicle state calculating unit 212, a traffic flow simulator 213, a vehicle type setting unit 215, and a charge determining unit 216.

The HDD 204 includes a travel history information table 241 in which the travel history information input from the travel history information collecting device 100 is stored. Here, the travel history information table 241 stores the same information as the travel history information stored in the travel history information table 161 of the travel history information collecting device 100.

The HDD 204 includes a road network information table 400 in which predetermined road network information is stored. The road network information is an information group in which a network of actual roads in a certain range is virtually reproduced. Specifically, the road network is a virtual road network which is constructed by coupling intersection models (also referred to as "nodes") simulating intersections and road models (also referred to as "links") simulating roads connecting the intersections in a mesh shape. The road network information is constructed to reproduce an actual road network through comparison with separately prepared map information or the like. The road model includes information such as actual road distances, number of lanes, and gradients. The road network information is used particularly for the traffic flow simulator 213 to more faithfully simulate the virtual vehicle B traveling. In this embodiment, the road network information is constructed in advance and is stored in a road network information table 400 of the HDD 204.

An operation input unit 205 includes, for example, a keyboard, a mouse, and a touch panel and receives an input of various operations. An image display unit 206 includes a liquid crystal display and displays various images such as an image for prompting a user to input a variety of information required for a traffic flow simulation and an image indicating a result of the traffic flow simulation. An external interface 207 is a connection unit that is used to transmit and receive information to and from an external device such as a printer or another computer and is a functional unit that transmits and receives a variety of information to and from the external device. A reading unit 208 is a functional unit that reads information stored in a portable storage medium 300. Examples of the portable storage medium 300 include a magnetic disk, an optical disc such as a compact disk (CD) and a digital versatile disc (DVD), an integrated circuit (IC) card, and a memory card.

The CPU 201, the ROM 202, the RAM 203, the HDD 204, the operation input unit 205, the image display unit 206, the external interface 207, and the reading unit 208 are electrically connected to each other via a system bus 209. Accordingly, the CPU 201 can access the ROM 202, the RAM 203, and the HDD 204, display various images on the image display unit 206, transmit and receive a variety of information to and from the external device via the external interface 207, read information from the portable storage medium 300 via the reading unit 208, and the like.

The simulation device 200 according to this embodiment, is connected to the travel history information collecting device 100, for example, via the external interface 207, reads the travel history information stored in the travel history information table 161 of the storage unit 106 of the travel history information collecting device 100, and stores the read travel history information in the travel history information table 241 of the HDD 204.

The CPU 201 calculates the power consumption of the virtual vehicle B using the acceleration calculating unit 211 and the vehicle state calculating unit 212. Here, the acceleration calculating unit 211 is a functional unit that calculates acceleration information indicating acceleration at each point in time while the measuring vehicle A travels based on the travel history information. As will be described later, the traffic flow simulator 213 simulates the travel of the virtual vehicle B so as to faithfully reproduce the behavior of the actual traveling of the measuring vehicle A based on the travel history information which is acquired in advance. The acceleration calculating unit 211 calculates the acceleration of the virtual vehicle B at each point in time in the simulated travel. Specifically, the acceleration calculating unit 211 calculates acceleration information from a variation in speed of the virtual vehicle B (the measuring vehicle A) every unit time (for example, 10 seconds) with reference to the speed information stored in the travel history information table 241. For example, when the speed of the virtual vehicle B (the measuring vehicle A) increases 18 km/h (5 m/s) after 10 seconds elapses from a point in time in travel, the acceleration of the virtual vehicle B (the measuring vehicle A) at that point in time is calculated to be 0.5 m/s$^2$.

The vehicle state calculating unit 212 is a functional unit that calculates a state quantity of a predetermined state of the virtual vehicle B which is assumed to travel in a travel manner equivalent to the travel of the measuring vehicle A. In this embodiment, the state quantity of a predetermined state is power consumption of the virtual vehicle B. The vehicle state calculating unit 212 calculates the power consumption at each point in time in the simulated travel of the virtual vehicle B which is performed by the traffic flow simulator 213 to be described later. Particularly, the vehicle state calculating unit 212 calculates the power consumption of the virtual vehicle B based on the acceleration information calculated by the acceleration calculating unit 211. A predetermined power consumption calculation model is used for the vehicle state calculating unit 212 to calculate the power consumption of the virtual vehicle B. The power consumption calculation model will be described later.

The traffic flow simulator 213 is a functional unit that simulates the virtual vehicle B traveling. The traffic flow simulator 213 according to this embodiment causes the virtual vehicle B to travel in a simulative manner based on the travel history information table 241 and the road network information table 400 stored in the HDD 204. More specifically, the traffic flow simulator 213 performs a simulation in which the virtual vehicle B travels in the road network (the travel route in which the measuring vehicle A actually travels) specified by the road network information at the position and the speed indicated by the travel history information. Accordingly, the traffic flow simulator 213 can faithfully reproduce the behavior in the actual traveling of the measuring vehicle A.

The vehicle type setting unit 215 is a functional unit that sets vehicle type specific information of the virtual vehicle B. The vehicle type specific information is a group of specific values which are uniquely defined for each actual vehicle type, and for example, the weight of the vehicle, the capacity of a storage battery mounted on an electric vehicle, the conversion efficiency into mechanical power, and the like are defined.

For example, when a large vehicle such as a bus or a truck is used as the virtual vehicle B, the vehicle type setting unit 215 sets vehicle type specific information indicating the large vehicle as the vehicle type specific information of the virtual vehicle B. In this embodiment, a plurality of vehicle type specific information (for example, vehicle type specific information indicating an ordinary automobile, a bus, and a motorcycle) applied to the virtual vehicle B is stored in advance in the HDD 204. The vehicle type setting unit 215 selects one vehicle type specific information desired by an operator from the plurality of vehicle type specific information stored in advance and outputs the selected vehicle type specific information to the vehicle state calculating unit 212.

The charge determining unit 216 determines whether to require charging as a simulation result of the travel of the virtual vehicle B based on the power consumption of the virtual vehicle B calculated by the vehicle state calculating unit 212 and the residual capacity of the storage battery of the virtual vehicle B.

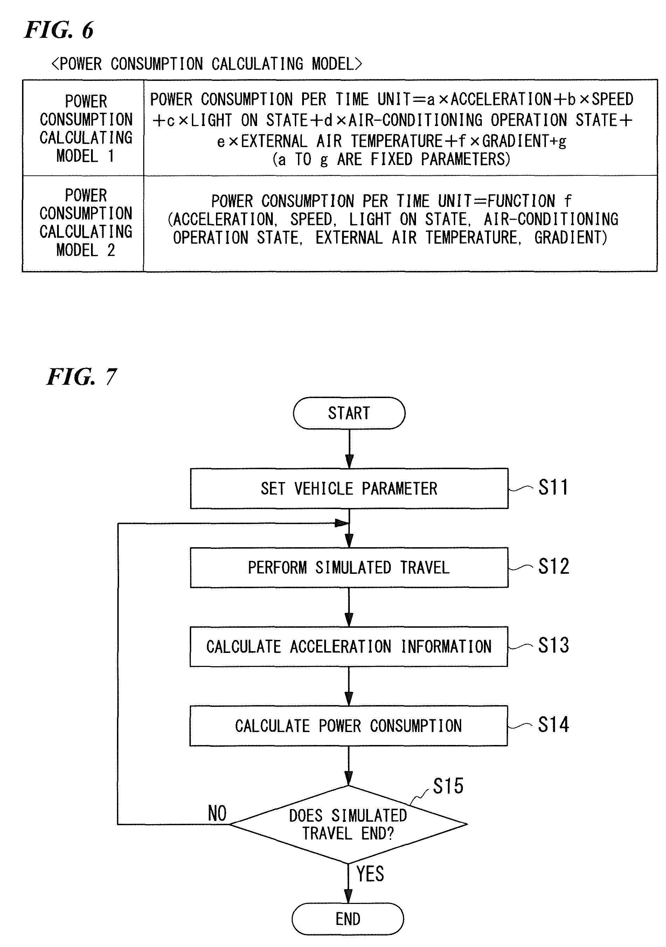

Fig. 6 is a diagram illustrating a power consumption calculation model according to the first embodiment of the present invention.

The vehicle state calculating unit 212 calculates the power consumption due to the simulated traveling of the virtual vehicle B based on the power consumption calculation model illustrated in Fig. 6.

The vehicle state calculating unit 212 calculates the power consumption by adding the power consumption per unit time (for example, per 10 seconds) of the virtual vehicle B in the simulated travel. Here, the vehicle state calculating unit 212 uses, for example, any one of power consumption calculation models 1 and 2 illustrated in Fig. 6 to calculate the "battery power consumption per unit time." Both of the power consumption calculation models 1 and 2 are calculation models for calculating the power consumption based on the acceleration information calculated by the acceleration calculating unit 211. It is generally known that the fuel efficiency of an automobile is greatly affected by acceleration and deceleration in travel of the vehicle. That is, since the power consumption calculation models 1 and 2 reflect the acceleration of the virtual vehicle B every unit time based on the acceleration information, the vehicle state calculating unit 212 can accurately calculate the power consumption in the simulated travel of the virtual vehicle B.

The vehicle state calculating unit 212 may calculate the residual battery capacity in the virtual vehicle B by performing a calculation represented by Equation 1 at each point in time in the simulated travel.

[Equation 1]

$$\text{Current residual battery capacity} = \text{previous residual battery capacity - battery}$$

$$\text{power consumption per unit time} \qquad \dots (1)$$

Here, the initial value of the residual battery capacity (electric storage capacity of the fully-charged storage battery) may be determined for each vehicle type specific information set by the vehicle type setting unit 215.

The meaning of reflecting the acceleration in the simulated travel in the power consumption calculation by the vehicle state calculating unit 212 will be described below. For example, it is assumed that the traffic flow simulator 213 performs a simulation in which the virtual vehicle B travels in a predetermined travel route at an average speed V. In this case, two patterns, pattern 1 in which the virtual vehicle B travels in the travel route at a constant speed V or pattern 2 in which the virtual vehicle B frequently repeats acceleration and deceleration in the travel route and the average speed V thereof is obtained, are considered as examples of the traveling behavior of the virtual vehicle B. Here, when the power consumption calculation model in which only the speed V of the virtual vehicle B is reflected is applied, the vehicle state calculating unit 212 calculates the same power consumption based on the same speed V in any of the patterns 1 and 2. However, when the vehicle state calculating unit 212 calculates the power consumption in consideration of the acceleration at each point in time in the travel, the power consumption in pattern 2 in which acceleration and deceleration are frequently repeated is greater than that in pattern 1 and this result matches the result in the real world.

As described above, the input acceleration information is calculated and acquired from the travel history information (Fig. 4) acquired per unit time in the actual travel of the measuring vehicle A by the travel history information collecting device 100. That is, the vehicle state calculating unit 212 calculates the power consumption per unit time using the actual acceleration per unit time. Accordingly, the vehicle state calculating unit 212 can reflect temporary sudden acceleration, which causes a particular increase in the power consumption, in the calculation of the power consumption, it is possible to more accurately estimate the power consumption.

In an electric vehicle, the storage battery is discharged during acceleration but the storage battery is charged during deceleration. Accordingly, the vehicle state calculating unit 212 may calculate the power consumption per unit time by setting the sign of the acceleration to be positive when the virtual vehicle B accelerates at a predetermined point and setting the sign of the acceleration to be negative when the virtual vehicle B decelerates. In this case, fixed coefficients having different values may be used for charging and discharging.

The power consumption calculation models 1 and 2 are only examples, and when a term associated with the acceleration of the virtual vehicle B is used, a power consumption calculation model in which a part of another term included in the power consumption calculation models 1 and 2 is not used, a power consumption calculation model in which another term is newly added, or the like may be used.

The light ON state appearing in the power consumption calculation models 1 and 2 is a value based on the number of lights turned on of the virtual vehicle B, and the air-conditioning operation state is a value based on the air-conditioning temperature of the virtual vehicle B. For example, the value of the light ON state is 0 (zero) when the lights of the virtual vehicle B are turned off, and the value of the air-conditioning operation state is 0 (zero) when the air-conditioning of the virtual vehicle B is turned off. Since the conversion efficiency of the storage battery into mechanical power is changed depending on the external air temperature, the power consumption calculation models 1 and 2 calculate the battery power consumption in consideration of the external air temperature. Accordingly, the vehicle state calculating unit 212 calculates the power consumption of an electric vehicle based on use conditions of devices of actually consuming power in the electric vehicle, and it is thus possible to more accurately calculate the battery power consumption.

The "gradient" appearing in the power consumption calculation models 1 and 2 is a gradient at each point in the travel route of the virtual vehicle B which is acquired from the road network information table 400. For example, when an uphill road is present in the travel route of the virtual vehicle B, the acceleration of the virtual vehicle B is 0 (zero) in the uphill section but power is actually consumed to ascend the uphill road. On the other hand, in a downhill section, the acceleration may increase purely by a coasting operation which does not consume power. The vehicle state calculating unit 212 according to this embodiment can more accurately calculate the battery power consumption by reflecting the gradient at each point in the travel route in which the simulated travel is carried out in addition to the acceleration of the virtual vehicle B.

The vehicle state calculating unit 212 according to this embodiment calculates the power consumption of the virtual vehicle B indicated by one selected from a plurality of vehicle type specific information stored in advance based on the selected vehicle type specific information. As described above, the vehicle type, the weight, and the like of the vehicle are defined in the vehicle type specific information. The vehicle type setting unit 215 selects one vehicle type specific information desired by an operator from the plurality of vehicle type specific information stored in advance and outputs the selected vehicle type specific information to the vehicle state calculating unit 212. The vehicle type specific information input from the vehicle state calculating unit 212 is reflected, for example, in the fixed coefficients (a to g) in power consumption calculation model 1. Specifically, when the vehicle type specific information of a large-sized vehicle such as a bus is applied to the virtual vehicle B, the weight of the virtual vehicle B is greater than that in the case in which the vehicle type specific information of an ordinary automobile is applied and thus the coefficient a of acceleration also increases (the greater the weight becomes, the greater the energy required for acceleration becomes). Accordingly, the vehicle state calculating unit 212 can simply estimate the power consumption of various vehicle types.

Fig. 7 is a flowchart illustrating a process flow in the simulation device according to the first embodiment of the present invention.

Fig. 7 is a flowchart illustrating the process flow of a vehicle power consumption simulation program which is executed by the CPU 201. The vehicle power consumption simulation program is stored in a predetermined area of the HDD 204. The vehicle power consumption simulation program starts its execution when an execution command is input by an operator via the operation input unit 205. At the point in time at which the execution command is input by the operator, it is assumed that the travel history information acquired by the travel history information collecting device 100 is input to the simulation device 200 and is stored in the HDD 204 in advance.

First, the vehicle type setting unit 215 sets the vehicle type specific information of the virtual vehicle B (step S11). The vehicle type specific information applied herein is one vehicle type specific information selected by the operator. The vehicle type setting unit 215 outputs the selected vehicle type specific information to the vehicle state calculating unit 212.

Then, the traffic flow simulator 213 performs simulated travel of the virtual vehicle B (step S12). Here, the traffic flow simulator 213 first refers to the travel history information table 241 and the road network information table 400 stored in the HDD 204. The traffic flow simulator 213 causes the virtual vehicle B to travel such that the position of the virtual vehicle B at each point in time in the simulated travel is present at the corresponding point on the road network designed by the position information of the travel history information table 241. The traffic flow simulator 213 causes the virtual vehicle B to travel such that the speed of the virtual vehicle B at each point in time in the simulated travel is equal to the speed indicated by the speed information of the travel history information table 241. Accordingly, the traffic flow simulator 213 can faithfully reproduce the behavior in the actual traveling of the measuring vehicle A.

The traffic flow simulator 213 may set a virtual time (such as daytime or nighttime), an external air temperature, and the like in the simulated travel of the virtual vehicle B in accordance with the operator's designation. The traffic flow simulator 213 may update the set time or the set external air temperature based on the virtual elapsed time in the simulated travel of the virtual vehicle B.

Then, the acceleration calculating unit 211 calculates the acceleration information at each point in time of the virtual vehicle B in the simulated travel (step S 13). The acceleration calculating unit 211 can calculate the acceleration information with direct reference to the speed information of the travel history information table 241 as described above.

Then, the vehicle state calculating unit 212 calculates the power consumption of the virtual vehicle B at each point in time in the simulated travel based on the power consumption calculation models 1 and 2 (Fig. 6) described above (step S14). Here, the vehicle state calculating unit 212 receives and substitutes the acceleration information calculated by the acceleration calculating unit 211 for the power consumption calculation models 1 and 2. The vehicle state calculating unit 212 substitutes the acceleration information for the power consumption calculation models 1 and 2 with reference to the light ON state, the air-conditioning operation state, the external air temperature, and the gradient of the virtual vehicle B in the simulated travel by the traffic flow simulator 213. Details of the fixed coefficients a to g in the power consumption calculation model 1 or the function f in the power consumption calculation model 2 are determined depending on the vehicle type specific information set by the vehicle type setting unit 215 in step S11. The numerical values of the "light ON state", the "air-conditioning operation state", the "external air temperature", and the "gradient" in the power consumption calculation models 1 and 2 reflect the virtual time or the external air temperature set in the simulated travel by the traffic flow simulator 213 or the road gradient defined in the road network information table 400.

When the power consumption at each point in time in the simulated travel of the virtual vehicle B is calculated, the vehicle state calculating unit 212 informs the operator of the result by displaying the result on the image display unit 206 or the like. Here, the charge determining unit 216 may display the determined result of whether the residual battery capacity at each point in time in the simulated travel is insufficient, that is, whether to require charging, by referring to the residual battery capacity (the value calculated by Equation 1) in the virtual vehicle B in the simulated travel.

Subsequently, the traffic flow simulator 213 determines whether a predetermined end condition of the simulated travel is satisfied (step S15). Here, when the determined result is NO, the process flow moves to step S12, the simulated travel is continuously performed, and the vehicle state calculating unit 212 continues to calculate the power consumption. On the other hand, when the determined result is YES, the traffic flow simulator 213 ends the travel simulating process. After the simulated travel by the traffic flow simulator 213 ends, the CPU 201 may display the calculation result of the vehicle state calculating unit 212, the determination result of the charge determining unit 216, and the like, for example, in the form of graphs on the image display unit 206. The CPU 201 may store the calculated result as data in the HDD 204 or may print the calculated result on a recording sheet using a printer connected thereto via the external interface 207.

As described above, the simulation device 200 according to this embodiment can faithfully reproduce the behavior (particularly, the variation in acceleration) in the actual travel of the measuring vehicle A in the simulated travel of the virtual vehicle B based on the travel history information (the position information, the speed information) detected by the travel history information collecting device 100 mounted on the measuring vehicle A which has traveled beforehand. Accordingly, the simulation device 200 can accurately simulate the power consumption when the virtual vehicle B as a target of the traffic flow simulation is an EV by referring to the acceleration at each point in time in the faithfully-reproduced simulated travel. Then, for example, the charge determining unit 216 can accurately detect a point at which the residual battery capacity of the electric vehicle is insufficient and thus the operator can appropriately understand at what point a charging station should be installed.

Since the measuring vehicle A may be a normal gasoline vehicle, the simulation device 200 according to this embodiment does not require an actual electric vehicle to actually travel to appropriately understand a position at which a charging station should be installed. Accordingly, it is possible to reduce costs of installation of a charging station.

In the simulation system 1 according to the first embodiment of the present invention, it is possible to reduce the time and cost required for situation reproduction in the traffic flow simulator and thus to obtain a more accurate simulation result.

The present invention is not limited to the above-mentioned embodiment.

For example, the travel history information collecting device 100 according to this embodiment employs a technique in which the position detecting unit 103 acquires the position information of the measuring vehicle A based on the latitude and longitude information received from the GPS satellites 90. However, a travel history information collecting device 100 according to another embodiment may employ an operation of estimating the position of the travel history information collecting device 100 from information of a gyro sensor, an acceleration sensor, and the like mounted thereon instead of the above-mentioned technique.

The acceleration calculating unit 211 according to this embodiment employs a technique of calculating the acceleration information from the variation in speed per unit time with reference to the speed information collected by the travel history information collecting device 100 and calculating the power consumption based on the acceleration information calculated by the acceleration calculating unit 211. However, a vehicle state calculating unit 212 according to another embodiment may calculate the power consumption with reference to the acceleration information directly measured in the actual travel of the measuring vehicle A. In this case, the travel history information collecting device 100 may have a function of directly detecting the acceleration in the actual travel of the measuring vehicle A using an acceleration sensor and storing the detected acceleration as the acceleration information. In this case, the acceleration information (unit: $m/s^2$) in addition to the time information, the position information (latitude and longitude), and the speed information (unit: km) may be stored in correlation with each other in the travel history information table 161.

<Second Embodiment>

A simulation system according to a second embodiment of the present invention will be described below with reference to the accompanying drawings. A simulation system 1 according to the second embodiment is different from that according to the first embodiment in the configuration of the simulation device 200.

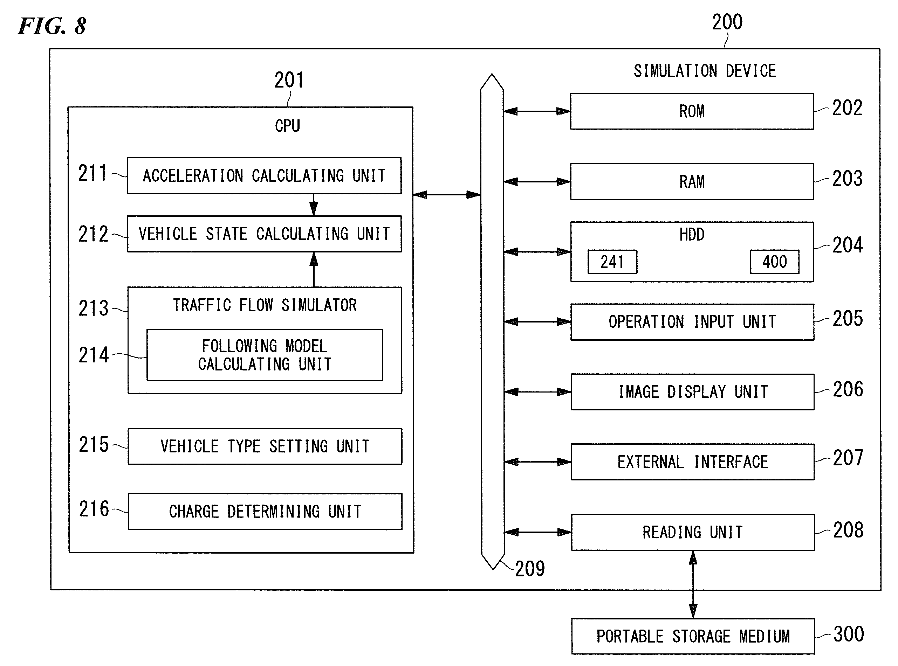

Fig. 8 is a block diagram illustrating a functional configuration of a simulation device according to the second embodiment of the present invention. In the drawing, the same functional configuration as in the simulation device 200 according to the first embodiment will be referenced by the same reference signs and description thereof will not be repeated.

The simulation device 200 according to the second embodiment includes a following model calculating unit 214. The following model calculating unit 214 has a calculation function included in the traffic flow simulator 213 and is a functional unit of simulating travel of a virtual following vehicle C (which will be described later) traveling behind the measuring vehicle A based on the travel history information stored in the travel history information table 241. The function of the following model calculating unit 214 will be described below in detail.

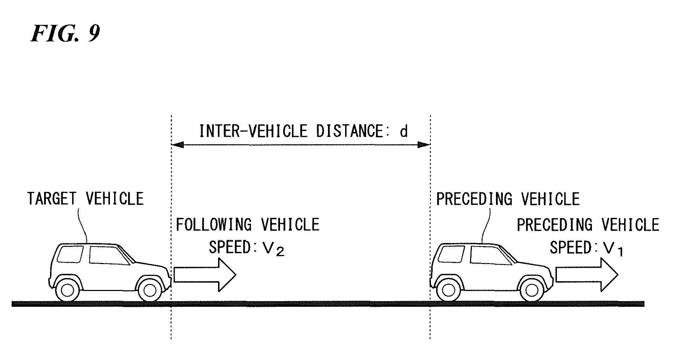

Fig. 9 is a conceptual diagram illustrating a following model which is used in the following model calculating unit according to the second embodiment of the present invention.

The traffic flow simulator 213 according to this embodiment can simulate travel behavior of a vehicle (hereinafter, referred to as a virtual following vehicle C) traveling behind the measuring vehicle A using a "following model" which is realized by the following model calculating unit 214. Here, the following model is a simulation model for simulating an actual traffic flow in which individual vehicles are expressed as independent vehicles which are driven by different drivers as in the real world. More specifically, the following model focuses on characteristics of an actual driver accelerating or decelerating a vehicle based on a relative relationship to a vehicle traveling nearest ahead thereof and models the travel behavior of the vehicle based on the characteristics.

Here, Equation 2 is used in a general following model.

[Equation 2]

$$a = a_1 + a_2 + a_3 - \lambda \sin\theta \qquad \cdots (2)$$

The "a" on the left in Equation 2 represents acceleration of a target vehicle (a vehicle of which the travel behavior will be simulated based on the following model as illustrated in Fig. 9). The acceleration a of the target vehicle is determined based on the values of the terms on the right in Equation 2. Here, the first term "$a_1$" on the right side of Equation 2 is a term based on the relative speed to a preceding vehicle (a vehicle traveling nearest ahead of the target vehicle as illustrated in Fig. 9) of the target vehicle and is expressed by Equation 3. "$\theta$" in Equation 2 represents the road gradient.

[Equation 3]

$$a_1(t) = \frac{\lambda_1}{[d(t-T_1)]^l}(V_1(t) - V_2(t)) \qquad \cdots (3)$$

Here, $V_1$ represents the speed of the preceding vehicle and $V_2$ represents the speed of the target vehicle. d represents an inter-vehicle distance between the preceding vehicle and the target vehicle (Fig. 9). Equation 3 represents the tendency that the target vehicle accelerates or decelerates in inverse proportion to the inter-vehicle distance d and in proportion to the relative speed $(V_1-V_2)$.

The second term "$a_2$" in the right side of Equation 2 is a term based on the inter-vehicle distance between the target vehicle and the preceding vehicle and is expressed by Equation 4.

[Equation 4]

$$a_2(t) = \frac{\lambda_2}{[d(t-T_2)]^m}(d(t-T_2) - f(V_2(t-T_2))) \qquad \cdots (4)$$

Here, f in Equation 4 represents a reference inter-vehicle distance. The reference inter-vehicle distance f is a predetermined inter-vehicle distance at which the driver of the target vehicle feels comfort. That is, Equation 4 represents characteristics that the target vehicle decelerates when the actual inter-vehicle distance d is less than the reference inter-vehicle distance f. The reference inter-vehicle distance f varies depending on the speed V of the target vehicle and thus is a function of the speed V.

The third term "$a_3$" in the right side of Equation 2 is a term based on a free flow speed of the target vehicle and is expressed by Equation 5.

[Equation 5]

$$a_3(t) = \frac{\lambda_3}{[d(t-T_3)]^n}(V_{exp} - V_2(t-T_3)) \qquad \cdots (5)$$

Here, $V_{exp}$ represents the free flow speed. The free flow speed refers to a traveling speed when the target vehicle is not in a following state (when a preceding vehicle is not present). That is, the free flow speed is a driving speed which is desired by the driver of the target vehicle when a preceding vehicle is not present. Equation 5 expresses characteristics that the target vehicle accelerates or decelerates such that the speed V2 of the target vehicle matches the free flow speed $V_{exp}$.

$\lambda$, $\lambda_1$, $X_2$, and $\lambda_3$ in Equations 2 to 5 are coefficients. $T_1$, $T_2$, and $T_3$ which represent delay times and define time lag until the respective terms (the relative speed, the inter-vehicle speed, and the free flow speed) act on the actual acceleration a. l, m, and n represent sensitivities which refer to degrees of influence on the inter-vehicle distance d in the respective terms.

The above-mentioned following model is an example, and another following model may not include a part of the terms or may include another term.

The traffic flow simulator 213 according to this embodiment simulates travel of the virtual following vehicle C traveling behind the measuring vehicle A using the above-mentioned following model which is realized by the following model calculating unit 214. Specifically, first, the traffic flow simulator 213 performs simulated travel of the virtual vehicle B so as to faithfully reproduce the actual travel behavior of the measuring vehicle A based on the travel history information table 241 of the HDD 204 (which is the same as described in the first embodiment). Then, the traffic flow simulator 213 simulates the travel of the virtual following vehicle C traveling behind the virtual vehicle B which travels in the same simulated travel manner as the measuring vehicle A based on the calculation (Equations 2 to 5) by the following model calculating unit 214.

Here, the following model calculating unit 214 can collectively simulate the travel of the virtual following vehicle C traveling behind the virtual vehicle B (that is, the measuring vehicle A) by setting the parameters (in addition to $\lambda$, $\theta$, f(V), and $V_{exp}$) used in Equations 2 to 5 and assigning appropriate initial values of the position information, the speed information, and the acceleration information of the virtual following vehicle C. For example, the following model calculating unit 214 sequentially calculates the inter-vehicle distance d based on the positional relationship between the virtual vehicle B as a preceding vehicle and the virtual following vehicle C as a target vehicle. The numerical values stored in the travel history information table 241 can be referred to for the speed $V_1$ of the virtual vehicle B as a preceding vehicle. Accordingly, the following model calculating unit 214 can perform the simulated travel of the virtual following vehicle C based on the calculations of Equations 2 to 5. The following model calculating unit 214 outputs the speed information, the acceleration information, and the like which are sequentially calculated in the course of calculating the following model in the simulated travel of the virtual following vehicle C to the vehicle state calculating unit 212.

In addition to the function in the first embodiment, the vehicle state calculating unit 212 according to this embodiment calculates the power consumption of the virtual following vehicle C, which is assumed to travel behind the measuring vehicle A, based on the acceleration information of the virtual following vehicle C which is calculated through the simulated travel of the virtual following vehicle C. As described above, the speed information and the acceleration information of the virtual following vehicle C are information which is sequentially calculated by the following model calculating unit 214 in the simulated travel. When the speed information and the acceleration information are input from the following model calculating unit 214, the vehicle state calculating unit 212 calculates the power consumption of the virtual following vehicle C based on a predetermined power consumption calculation model. The power consumption calculation model used therein is the same as in the first embodiment. That is, the vehicle state calculating unit 212 calculates the power consumption in the simulated travel of the virtual following vehicle C based on the power consumption calculation models 1 and 2 illustrated in Fig. 6.

In this way, the vehicle state calculating unit 212 according to this embodiment can calculate the power consumption of the virtual following vehicle C traveling behind virtual vehicle B as well as the power consumption of the virtual vehicle B traveling in a simulative manner based on the travel history information.

The following model calculating unit 214 may simulate travel of virtual following vehicles D, E, F, ... traveling behind the virtual following vehicle C as well as simulate the travel of the virtual following vehicle C traveling behind the virtual vehicle B based on the following model. Accordingly, the simulation device 200 can calculate the power consumption of a plurality of vehicles from one travel history information. Therefore, the operator can understand the average power consumption in the travel route in which the simulated travel is performed (the travel route in which the measuring vehicle actually travels).

In the simulation system 1 according to the second embodiment of the present invention, it is possible to calculate the power consumption of a plurality of vehicles and thus to perform a simulation capable of forecasting power demand in a broader range.

The vehicle type setting unit 215 according to this embodiment may set different vehicle type specific information for the virtual vehicle B and the plurality of virtual following vehicles C, D, E, .... For example, the virtual following vehicle C may be set as an ordinary automobile and the virtual following vehicle D may be set as a bus.

Similarly, the following model calculating unit 214 according to this embodiment may apply different following models to the plurality of virtual following vehicles C, D, E, .... For example, in the real world, the reference inter-vehicle distance f (the inter-vehicle distance at which a driver feels comfortable) or the free flow speed $V_{exp}$ (the traveling speed which is desired by a driver) varies depending on the difference in personality between drivers of the vehicles. The feedback speed to acceleration or deceleration varies depending on the drivers. In consideration of these differences, different parameters (f(V), $V_{exp}$, $T_1$, $T_2$, $T_3$, l, m, and n) may be assigned to the virtual following vehicles C, D, E, ... to calculate the power consumption. Accordingly, it is possible to realize the simulated travel closer to the real world in the simulation as a whole.

The free flow speed $V_{exp}$ may be derived from the correlation with the number of lanes of a road. In this case, the following model calculating unit 214 may sequentially change the free flow speed $V_{exp}$ with reference to the number of lanes of the road in which the simulated travel is performed and which is stored in the road network information table 400. The following model calculating unit 214 may set the average value for each predetermined section of the travel route which is calculated based on the travel history information acquired through the actual travel of the measuring vehicle A as the free flow speed $V_{exp}$.

The simulation device 200 according to the second embodiment calculates the power consumption of a plurality of vehicles based on one travel history information, but the simulation device 200 according to this embodiment may calculate the power consumption based on two or more travel history information. In this case, the simulation device 200 can calculate the power consumption in a broader road network, for example, based on first travel history information and second travel history information acquired through travel in a travel route other than the travel route of the first travel history information.

The simulation devices 200 according to the first and second embodiments calculate the power consumption as the state quantities of the virtual vehicle B or the virtual following vehicles C, D, E, ..., but a simulation device 200 according to another embodiment is not limited to this configuration. For example, the simulation device 200 may calculate an abrasion loss or a consumption loss of a vehicle component (such as a shaft or engine oil). In this case, the vehicle state calculating unit 212 has calculation models for calculating abrasion losses and consumption losses of various vehicle components.

The simulation device 200 includes a computer system therein. The above-mentioned processes of the simulation device 200 are stored in the form of a program in a computer-readable recording medium and the processes are performed by causing the computer system to read and execute the program. Here, examples of the computer-readable recording medium include a magnetic disk, a magneto-optical disc, a compact disc-read only memory (CD-ROM), and a semiconductor memory. This computer program may be transmitted to a computer via a communication line and the computer having received the program may execute the program.

[Industrial Applicability]

According to the above-mentioned embodiments, it is possible to provide a simulation device that can reduce time and cost required for situation reproduction in a traffic flow simulator and that can obtain a more accurate simulation result.

[Reference Signs List]

1 Simulation system
100 Travel history information collecting device
101 Power supply circuit
102 Internal battery
103 Position detecting unit
131 GPS receiver
132 GPS complementing sensor unit
133 Dead-reckoning navigation processing unit
104 Speed acquiring unit
105 travel history information generating unit
106 Storage unit
161 Travel history information table
107 External interface
108 Timer unit
200 Simulation device
201 CPU
211 Acceleration calculating unit
212 Vehicle state calculating unit
213 Traffic flow simulator
214 Following model calculating unit
215 Vehicle type setting unit
216 Charge determining unit
202 ROM
203 RAM
204 HDD
241 Travel history information table
205 Operation input unit
206 Image display unit
207 External interface
208 Reading unit
209 System bus
300 Portable storage medium
400 Road network information table
90 GPS satellite

**Claims**

1. A simulation device comprising:

    an acceleration calculating unit configured to calculate acceleration information which indicates acceleration at each point in time while a measuring vehicle travels based on travel history information, which is information acquired based on actual travel of the measuring vehicle on a predetermined travel route; and
    a vehicle state calculating unit configured to calculate a state quantity of a predetermined state of a predetermined virtual vehicle, which is assumed to travel in a travel manner equivalent to the travel of the measuring vehicle, based on the acceleration information.

2. The simulation device according to claim 1, wherein the vehicle state calculating unit calculates the state quantity of the virtual vehicle with one vehicle type specific information selected from one or more vehicle type specific information including a group of specific values which are uniquely determined in advance for vehicle types based on the acceleration information and the selected one vehicle type specific information.

3. The simulation device according to claim 1 or 2, further comprising a following model calculating unit configured to simulate travel of a virtual following vehicle which travels behind the measuring vehicle based on the travel history information,
wherein the vehicle state calculating unit calculates the state quantity of the virtual following vehicle, which is assumed to travel behind the measuring vehicle, based on the acceleration information of the virtual following vehicle which is acquired from simulated travel of the virtual following vehicle.

4. The simulation device according to any one of claims 1 to 3, wherein the vehicle state calculating unit calculates power consumption as the state quantity.

5. The simulation device according to any one of claims 1 to 4, wherein the acceleration calculating unit inputs position information and speed information of the measuring vehicle which are acquired by a GPS as the travel history information.

6. A simulation method comprising:

calculating acceleration information indicating acceleration at each point in time while a measuring vehicle travels based on travel history information, which is information acquired based on actual travel of the measuring vehicle on a predetermined travel route; and
calculating a state quantity of a predetermined state of a predetermined virtual vehicle, which is assumed to travel in a travel manner equivalent to the travel of the measuring vehicle, based on the acceleration information.

7. A program causing a computer of a simulation device to function as:

acceleration calculating means configured to calculate acceleration information which indicates acceleration at each point in time while a measuring vehicle travels based on travel history information, which is information acquired based on actual travel of the measuring vehicle on a predetermined travel route; and
vehicle state calculating means configured to calculate a state quantity of a predetermined state of a predetermined virtual vehicle, which is assumed to travel in a travel manner equivalent to the travel of the measuring vehicle, based on the acceleration information.

*FIG. 1*

1

| 100 | | 200 |
|---|---|---|
| TRAVEL HISTORY INFORMATION COLLECTING DEVICE | → | SIMULATION DEVICE |

FIG. 2

90

MEASURING
VEHICLE A

P1

P2

P3

P4

P5

SPEED: V1

100

SPEED: V2
AFTER 10
SECONDS
ELAPSES

SPEED: V3
AFTER 20
SECONDS
ELAPSES

SPEED: V4
AFTER 30
SECONDS
ELAPSES

SPEED: V5
AFTER 40
SECONDS
ELAPSES

EP 2 991 055 A1

**FIG. 3**

TRAVEL HISTORY INFORMATION COLLECTING DEVICE — 100

VEHICLE POWER SUPPLY

POWER SUPPLY CIRCUIT — 101

INTERNAL BATTERY — 102

POSITION DETECTING UNIT — 103

GPS RECEIVER — 131

GPS COMPLEMENTING SENSOR UNIT — 132

DEAD-RECKONING NAVIGATION PROCESSING UNIT — 133

SPEED ACQUIRING UNIT — 104

TRAVEL HISTORY INFORMATION GENERATING UNIT — 105

STORAGE UNIT — 106 / 161

EXTERNAL INTERFACE — 107

TIMER UNIT — 108

EP 2 991 055 A1

## FIG. 4

EP 2 991 055 A1

< TRAVEL HISTORY INFORMATION TABLE>

| TIME | · · · | 9:39:00 | 9:39:10 | 9:39:20 | · · · | 9:40:20 | 9:40:30 | · · · |
|---|---|---|---|---|---|---|---|---|
| LATITUDE | | +35.25.33.135 | +35.25.44.456 | +35.25.45.222 | | +35.35.10.123 | +35.35.22.234 | |
| LONGITUDE | | +139.40.20.234 | +139.40.50.123 | +139.40.55.111 | | +139.45.10.567 | +139.45.15.432 | |
| SPEED | | 45.5 | 56.5 | 60.0 | | 52.0 | 63.5 | |

**FIG. 5**

SIMULATION DEVICE — 200

CPU — 201

- 211 — ACCELERATION CALCULATING UNIT
- 212 — VEHICLE STATE CALCULATING UNIT
- 213 — TRAFFIC FLOW SIMULATOR
- 215 — VEHICLE TYPE SETTING UNIT
- 216 — CHARGE DETERMINING UNIT

- ROM — 202
- RAM — 203
- HDD (241, 400) — 204
- OPERATION INPUT UNIT — 205
- IMAGE DISPLAY UNIT — 206
- EXTERNAL INTERFACE — 207
- READING UNIT — 208

209

PORTABLE STORAGE MEDIUM — 300

EP 2 991 055 A1

## FIG. 6

<POWER CONSUMPTION CALCULATING MODEL>

| POWER CONSUMPTION CALCULATING MODEL 1 | POWER CONSUMPTION PER TIME UNIT=a×ACCELERATION+b×SPEED +c×LIGHT ON STATE+d×AIR-CONDITIONING OPERATION STATE+ e×EXTERNAL AIR TEMPERATURE+f×GRADIENT+g (a TO g ARE FIXED PARAMETERS) |
|---|---|
| POWER CONSUMPTION CALCULATING MODEL 2 | POWER CONSUMPTION PER TIME UNIT=FUNCTION f (ACCELERATION, SPEED, LIGHT ON STATE, AIR-CONDITIONING OPERATION STATE, EXTERNAL AIR TEMPERATURE, GRADIENT) |

## FIG. 7

```
        ( START )
            │
            ▼
  ┌─────────────────────┐
  │ SET VEHICLE PARAMETER│──── S11
  └─────────────────────┘
            │
            ▼
  ┌─────────────────────┐
  │ PERFORM SIMULATED TRAVEL │──── S12
  └─────────────────────┘
            │
            ▼
  ┌───────────────────────────┐
  │ CALCULATE ACCELERATION INFORMATION │──── S13
  └───────────────────────────┘
            │
            ▼
  ┌───────────────────────────┐
  │ CALCULATE POWER CONSUMPTION │──── S14
  └───────────────────────────┘
            │
            ▼
        ╱ DOES SIMULATED ╲          S15
   NO  ╱   TRAVEL END?    ╲
◄──────╲                  ╱
        ╲                ╱
            │ YES
            ▼
        ( END )
```

**FIG. 8**

EP 2 991 055 A1

*FIG. 9*

INTER-VEHICLE DISTANCE: d

TARGET VEHICLE

FOLLOWING VEHICLE
SPEED: $V_2$

PRECEDING VEHICLE

PRECEDING VEHICLE
SPEED: $V_1$

**INTERNATIONAL SEARCH REPORT**

| International application No. |
| --- |
| PCT/JP2014/063465 |

A. CLASSIFICATION OF SUBJECT MATTER
*G08G1/00*(2006.01)i

According to International Patent Classification (IPC) or to both national classification and IPC

B. FIELDS SEARCHED

Minimum documentation searched (classification system followed by classification symbols)
G08G1/00

Documentation searched other than minimum documentation to the extent that such documents are included in the fields searched
Jitsuyo Shinan Koho          1922–1996   Jitsuyo Shinan Toroku Koho   1996–2014
Kokai Jitsuyo Shinan Koho   1971–2014   Toroku Jitsuyo Shinan Koho   1994–2014

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| Y | JP 2007-287168 A  (Toshiba Corp.), 01 November 2007 (01.11.2007), paragraphs [0002] to [0033], [0096], [0107] (Family: none) | 1-7 |
| Y | JP 2012-141799 A  (Mitsubishi Heavy Industries, Ltd.), 26 July 2012 (26.07.2012), claim 5 & WO 2012/090703 A1    & CN 103250193 A & SG 190920 A | 1-7 |
| Y | JP 10-307983 A  (NKK Corp.), 17 November 1998 (17.11.1998), paragraphs [0005], [0015] to [0016] (Family: none) | 2,5 |

☐  Further documents are listed in the continuation of Box C.          ☐  See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered   to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 09 June, 2014 (09.06.14) | 24 June, 2014 (24.06.14) |

| Name and mailing address of the ISA/ Japanese Patent Office | Authorized officer |
| --- | --- |
| Facsimile No. | Telephone No. |

Form PCT/ISA/210 (second sheet) (July 2009)

**EP 2 991 055 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2013114109 A
- JP HEI11232583 B